# EUROPÄISCHE PATENTSCHRIFT

(11) **EP 1 891 355 B1**
(45) Veröffentlichungstag und Bekanntmachung des Hinweises auf die Patenterteilung: **25.05.2011**
(21) Anmeldenummer: 06754182.1
(22) Anmeldetag: 07.06.2006
(51) Int. Cl.: F16H 61/20, F16H 59/18, F16H 59/54

(54) **VERFAHREN ZUM SCHALTEN EINES KRAFTFAHRZEUGES-AUTOMATIKGETRIEBES MIT HYDRODYNAMISCHEM DREHMOMENTWANDLER BEIM ANHALTEN DES FAHRZEUGES**
METHOD FOR SHIFTING A MOTOR VEHICLE AUTOMATIC TRANSMISSION WITH A HYDRODYNAMIC TORQUE CONVERTER WHEN THE VEHICLE COMES TO A STOP
PROCEDE DE COMMUTATION D'UNE BOITE DE VITESSES AUTOMATIQUE D'UN VEHICULE AUTOMOBILE AVEC UN CONVERTISSEUR DE COUPLE HYDRODYNAMIQUE LORS DE L'ARRET DU VEHICULE

(30) Priorität: 11.06.2005 DE 102005027098
(43) Veröffentlichungstag der Anmeldung: 27.02.2008
(73) Patentinhaber: ZF Friedrichshafen AG, 88038 Friedrichshafen (DE)
(72) Erfinder: EISELE, Markus, 88048 Friedrichshafen (DE); SORG, Franz, 88085 Langenargen (DE); NOLZEN, Harry, 88069 Tettnang (DE); BLASER, Juergen, 88074 Meckenbeuren (DE); VOGT, Thomas, 78576 Em.-Liptingen (DE)
(86) Internationale Anmeldenummer: PCT/EP2006/005417
(87) Internationale Veröffentlichungsnummer: WO 2006/133834

(56) Entgegenhaltungen:
- WO-A-00/70318
- DE-A1- 10 020 147
- DE-B3- 10 342 179

## Beschreibung

Die Erfindung betrifft ein Verfahren zum Schalten eines Kraftfahrzeug-Automatikgetriebes mit hydrodynamischem Drehmomentwandler beim Anhalten des Kraftfahrzeuges aus dem Fahrzustand, wobei bei Vorliegen bestimmter, vorgegebener Anhaltebedingungen das Getriebe automatisch in einen Bereitschaftsmodus schaltet.

Herkömmliche, bekannte Automatikgetriebe der im Oberbegriff des Patentanspruches 1 genannten Art bleiben beim Anhaltevorgang im festen Gang, was bedeutet, dass die Antriebsverbindung zwischen dem Fahrzeugmotor und den Antriebsrädern bestehen bleibt, bis das Fahrzeug steht. Nach einer bestimmten vorgegebenen Zeit (z. B. 2 Sekunden nach dem Stillstand) wird bei weiter bestehenden Anhaltebedingungen, also beispielsweise bei nicht betätigtem Gaspedal und stehendem Fahrzeug, das Getriebe in den Bereitschaftsmodus geschaltet. In diesem Bereitschaftsmodus befindet sich das Getriebe in einem Zustand, in dem dieses sehr wenig Drehmoment übertragen kann.

Bei einem Anhaltevorgang eines Kraftfahrzeuges mit einem derartigen Automatikgetriebe werden folgende Fahrzustände durchfahren:

Beim Abbremsen des Fahrzeuges wird gegebenenfalls eine den hydrodynamischen Drehmomentwandler überbrückende mechanische Kupplung gelöst, so dass das Drehmoment in der Antriebsanlage wieder über den Drehmomentwandler übertragen wird. Zunächst befindet sich der Drehmomentwandler im Schubmomentenbetrieb, wobei von den Antriebsrädern des zunächst noch schnell fahrenden Fahrzeuges ein Drehmoment über den Drehmomentwandler auf den im Leerlauf laufenden Motor übertragen wird. Wenn sich die Geschwindigkeit des Fahrzeuges weiter verlangsamt, wird ein Punkt erreicht, bei dem die Drehzahl der mit den Antriebsrädern über das Getriebe gekoppelten Wandlerturbine etwa gleich der Drehzahl der mit dem Motor gekoppelten Wandlerpumpe ist. Im Bereich dieser Drehzahlgleichheit ist die Antriebsanlage drehmomentenfrei.

Wird das Fahrzeug weiter abgebremst und dadurch die Drehzahl der Wandlerturbine weiter verringert, so kommt der Drehmomentwandler in einen Zugmomentenbetrieb, das heißt, der auf eine Leerlaufdrehzahl eingeregelte Motor überträgt über den Drehmomentwandler und das Getriebe ein Drehmoment auf die Antriebsräder, welches von der Betriebsbremse abgebremst werden muss. In diesem Bereich wird im Allgemeinen eine Rückschaltung des Getriebes, beispielsweise eine Rückschaltung vom 2. Gang in den 1. Gang (RS 2-1) durchgeführt, wobei sich das Zugmoment wieder verringert. Wird das Fahrzeug weiter verzögert, so wird das Zugmoment wieder größer, so dass das Fahrzeug mit der Betriebsbremse wieder verstärkt gegen das vom im Leerlauf befindlichen Motor aufgebrachte und vom Drehmomentwandler übertragene Zugmoment abgebremst werden muss. Das bedeutet einen nicht unerheblichen und ineffektiven Kraftstoffverbrauch.

Das in den Drehmomentwandler eingeleitete Drehmoment wird zu 100 % in Verlustleistung (Wärme) umgewandelt, welches bei den in dem beschriebenen Fahrzustand gleichzeitig auftretenden ungünstigen Kühlungsbedingungen infolge eines verringerten Öldurchsatzes im Getriebe, eines verringerten Wasserdurchsatzes im Kühlsystem und einer verringerten Lüfterleistung problematisch sein kann.

Ein weiteres Problem wird auch darin gesehen, dass infolge des im Zugmomentenbetrieb vom Motor über den Drehmomentwandler und das Getriebe auf die Antriebsräder übertragenen Drehmomentes die Bremsleistung der Antriebsachse geringer ist, so dass die jeweils andere Achse zum Blockieren neigen kann.

Wie weiter bereits beschrieben wurde, wird nach dem Anhalten des Fahrzeuges bei weiter bestehenden Anhaltebedingungen das Getriebe erst nach Ablauf einer vorgegebenen Zeit in den Bereitschaftsmodus geschaltet. Wenn das Fahrzeug z. B. an einer Bergaufsteigung zum Stehen kommt, dann neigt der Fahrer dazu, den Druck auf das Bremspedal zu verringern, da das Fahrzeug zunächst zumindest teilweise durch das weiter vom Motor auf die Antriebsräder übertragene Antriebsmoment gehalten wird. Wenn nun das Getriebe in den Bereitschaftsmodus geschaltet wird, so macht sich dies einerseits mit einem Entlastungsstoß bemerkbar, der vom Fahrer als unangenehm empfunden wird. Außerdem wird nun die Antriebsanlage momentenfrei, so dass der Fahrer unter Umständen stärker die Bremse zu betätigen hat, um ein Rollen des Fahrzeugs zu verhindern.

Vor diesem Hintergrund liegt der Erfindung die Aufgabe zugrunde, ein Verfahren der im Oberbegriff des Patentanspruches 1 genannten Art zu schaffen, mit welchem die vorne beschriebenen Nachteile hinsichtlich des ineffektiven Kraftstoffverbrauches während des Anhaltevorganges und beim Stillstand, der Kühlungsprobleme, ferner hinsichtlich des Entlastungsstoßes und des Zurückrollens an einer Aufwärtssteigung vermieden werden. Das Dokument DE 100 20147 A beschreibt ein Verfähren mit den Merkmalen des Oberbegriffs von Anspruch 1.

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind.

Der Erfindung liegt die Erkenntnis zugrunde, dass bei erkennbarem Anhaltewunsch ein Weiterbestehen der Antriebsverbindung zwischen Motor und Antriebsrädern nicht nur unnötig sondern nachteilig ist, und als Ursache für die vorne beschriebenen Nachteile angesehen werden kann.

Demnach geht die Erfindung aus von einem Verfahren zum Schalten eines Kraftfahrzeug-Automatikgetriebes mit hydrodynamischem Drehmomentwandler beim Anhalten des Kraftfahrzeuges aus dem Fahrzustand, wobei bei Vorliegen bestimmter vorgegebener Anhaltebedingungen das Getriebe automatisch in einen Bereitschaftsmodus schaltet.

Zur Lösung der gestellten Aufgabe ist vorgesehen, dass bei bestimmten, vorgegebenen Anhaltebedingungen noch während des Fahrzustandes das Getriebe in den Bereitschaftsmodus schaltet.

Diese Anhaltebedingungen liegen beispielsweise vor, wenn aus bestimmten, vom Fahrer vorgenommenen Aktionen ein Anhaltewunsch des Fahrers erkennbar ist und das Fahrzeug verzögert wird. In diesem Fall schaltet das Getriebe in den Bereitschaftsmodus, wobei die Antriebsanlage für die Übertragung eines Drehmomentes unterbrochen wird.

Infolge der Unterbrechung der Antriebsanlagees entsteht weder während der Verzögerungsphase noch im Stillstand des Fahrzeuges ein nennenswertes Zugmoment, welches von der Betriebsbremse kompensiert werden muss, so dass insoweit auch kein uneffektiver Kraftstoffverbrauch auftritt. Außerdem unterbleibt ein Entlastungsstoß und eine Veränderung der Drehmmomente nach dem Anhalten.

Da beim Anhaltevorgang kein Drehmoment auf die Antriebsräder übertragen wird, wird ein vom Fahrer aufgebrachter Bremsdruck gleichmäßig sowohl auf die Antriebsräder als auch auf das jeweils andere Räderpaar übertragen, so dass eine verminderte Bremsleistung bei den Antriebsrädern nicht zu befürchten ist.

Ein weiterer Vorteil wird darin gesehen, dass im Drehmomentwandler keine Verlustwärme entsteht, die beim Anhaltevorgang gegebenenfalls auftretende Kühlungsprobleme verstärken würde.

In einer bevorzugten Ausgestaltung des erfindungsgemäßen Verfahrens ist vorgesehen, dass die vorgegebenen Anhaltebedingungen umfassen:
a) Gaspedal nicht betätigt,
b) Betriebsbremse betätigt.

Diese Bedingungen kennzeichnen eindeutig den Anhaltewunsch des Fahrers.

Die Umschaltung in den Bereitschaftsmodus erfolgt gemäß einer bevorzugten Ausgestaltung der Erfindung dann, wenn die Drehzahl der Wandlerturbine unter die Drehzahl der Wandlerpumpe abgesunken ist In diesem Zustand ist die Bedingung für einen Zugmomentenbetrieb eingetreten, der, wie oben ausgeführt wurde, vermieden werden soll.

Die Umschaltung in den Bereitschaftsmodus erfolgt vorzugsweise, wenn die Drehzahl der Wandlerturbine zwischen 100 U/min bis 200 U/min, vorzugsweise etwa 150 U/min unter der Drehzahl der Wandlerpumpe liegt. Dieser Zustand liegt eindeutig unterhalb des indifferenten, drehmomentarmen Zustandes bei Drehzahlgleichheit, so dass er sicher zu detektieren ist.

Für den Fall, dass das Automatikgetriebe mit einer Retardervorrichtung ausgestattet oder verbunden ist, ist gemäß einer weiteren Ausgestaltung der Erfindung vorgesehen, dass vor dem Umschalten in den Bereitschaftsmodus die Retardervorrichtung automatisch ausgeschaltet wird, so dass der Bremsvorgang eindeutig nur noch über die vom Fahrer betätigte Betriebsbremse erfolgt. Die Retardervorrichtung wird vorzugsweise ausgeschaltet, sobald die Drehzahl der über das Getriebe mit den Antriebsrädern gekoppelten Wandlerturbine unter die Drehzahl der mit dem Motor gekoppelten Wandlerpumpe absinkt.

Die Erfindung lässt sich anhand der beigefügten Zeichnungen näher erläutern.
In dieser zeigt:
- Fig. 1: schematisch einen Teil der Antriebsanlagees eines Kraft- fahrzeuges mit Automatikgetriebe und hydrodynamischem Drehmomentwandler;
- Fig.2: ein Drehzahl-Zeit-Diagramm für ein Schaltverfahren ge- mäß dem Stand der Technik;
- Fig. 3: ein Diagramm, ähnlich dem der Fig. 2, für ein erfindungs- gemäßes Schaltverfahren.

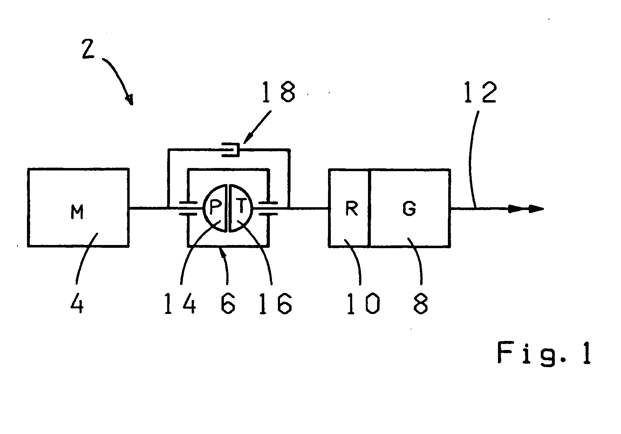

Die in Fig. 1 schematisch dargestellte Antriebsanlage 2 umfasst einen Fahrzeugmotor 4, einen diesem nachgeordneten hydrodynamischem Drehmomentwandler 6 und ein mit dem Drehmomentwandler antriebsverbundenes Automatikgetriebe 8, welchem ein Retarder 10 zugeordnet ist. Die Getriebe-Retardereinheit 8, 10 ist über eine Ausgangswelle 12 mit hier nicht dargestellten Antriebsrädern des Kraftfahrzeuges verbunden. Der Retarder 10 dient in bekannter Weise als verschleißfrei arbeitende Dauerbremse für länger andauernde Bremsvorgänge. Auf diese Weise kann die so genannte Betriebsbremse geschont und die Gefahr eines "Fading" vermieden werden, so dass die Betriebsbremse stets mit voller Leistung zur Verfügung steht.

Der Drehmomentwandler 6 umfasst im wesentlichen eine mit dem Motor 4 antriebsverbundene hydraulische Pumpe 14, deren Pumpleistung von der mit dem Getriebe 8 antriebsverbundenen Turbine 16 aufgenommen und weitergeleitet wird.

Wie aus der Fig. 1 weiter zu entnehmen ist, kann der hydraulische Wandler 6 durch eine automatisch schaltende mechanische Kupplung 18 überbrückt werden, um beim kontinuierlichen Fahrbetrieb einen Wandlerschlupf auszuschalten. Der Drehmomentwandler 6, das Getriebe 8, der Retarder 10 und die Kupplung 18 können als eine Baueinheit augeführt sein.

Das Automatikgetriebe 8 hat bei modernen Kraftfahrzeugen im Allgemeinen mindestens zwei oder mehr Vorwärtsgänge, um eine bessere Anpassung der Kraftübertragung an den optimalen Arbeitsbereich des Motors zu ermöglichen. Im vorliegenden Fall werden Automatikgetriebe mit zwei Vorwärtsgängen beispielhaft beschrieben.

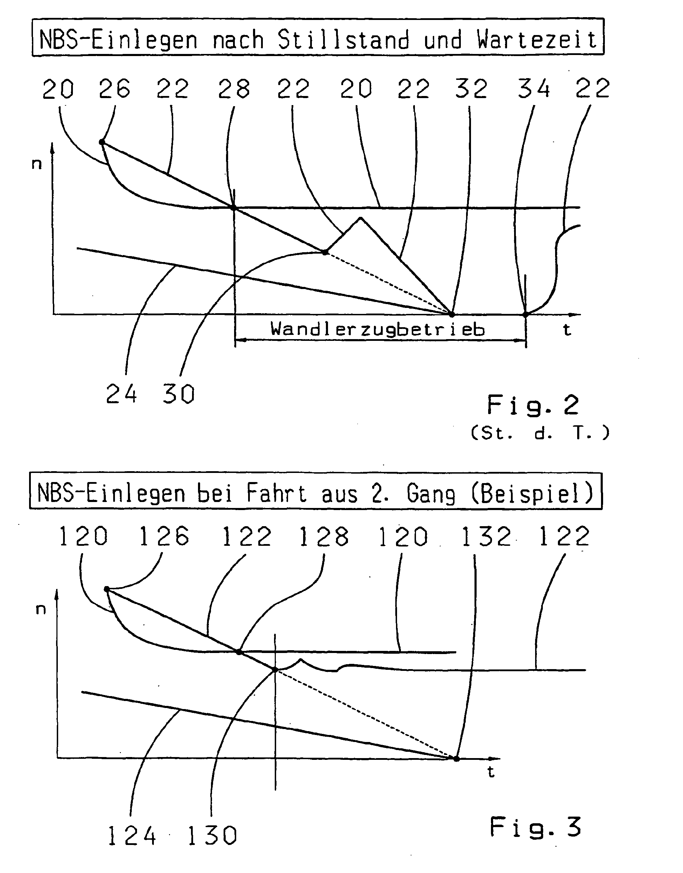

Fig. 2 zeigt in einem Drehzahl-Zeit-Diagramm (n-t-Diagramm) einen Anhaltevorgang mit einem gattungsgemäßen Fahrzeug gemäß dem Stand der Technik. Bei bekannten Automatikgetrieben bleibt beim Anhaltevorgang ein fester Gang geschaltet, bis das Fahrzeug steht. Nach Ablauf einer bestimmten, vorgegebenen Zeit nach dem Stillstand des Fahrzeuges schaltet das Getriebe bei weiter bestehenden Anhaltebedingungen (z. B. Betriebsbremse betätigt) in den Bereitschaftsmodus.

In Fig. 2 ist die Drehzahl des Motors 4 bzw. der damit antriebsverbundenen Hydraulikpumpe 14 durch die Kurve 20, die Drehzahl der Turbine 16 durch die Kurve 22 und die Abtriebsdrehzahl der mit den Antriebsrädern verbundenen Ausgangswelle 12 mit 24 bezeichnet.

Wenn der Fahrer das Fahrpedal entlastet und das Fahrzeug abbremst, dann öffnet im Punkt 26 die mechanische Kupplung 18, so dass das Drehmoment der Antriebsanlagees wieder über den einen Schlupf zwischen Pumpe 14 und Turbine 16 zulassenden Drehmomentwandler 6 übertragen wird. Die Motordrehzahl 20 und die Drehzahl der damit fest verbundenen Pumpe 16 fallen ab und stabilisieren sich bei der in Fig. 2 durch eine horizontale Linie dargestellten Leerlaufdrehzahl.

Gleichzeitig wird das Fahrzeug abgebremst, so dass auch die Drehzahl 22 der mit den Antriebsrädern über das Automatikgetriebe 8 noch verbundenen Turbine 16 abnimmt. Da die Motordrehzahl 20 zunächst schneller abnimmt als die Turbinendrehzahl 22, arbeitet der Wandler zunächst im Schubmomentenbetrieb, d. h. der Motor wirkt bremsend.

Im Bereich der Drehzahlgleichheit von Motor und Turbine im Punkt 28 ist der Drehmomentwandler 6 drehmomentenfrei. Wird das Fahrzeug weiter abgebremst und nimmt die Turbinendrehzahl 22 weiter ab, so kommt der Wandler 6 in einen Zugmomentenbetrieb, d. h. die überschüssige Motorleistung des im Leerlauf laufenden Motors 4 muss über die Betriebsbremse zusätzlich abgebremst werden. In diesem Bereich wird im Allgemeinen eine Rückschaltung durchgeführt. In dem in Fig. 2 dargestellten Beispiel wird im Punkt 30 eine Rückschaltung vom 2. Gang in den 1. Gang ausgeführt, so dass die Turbinendrehzahl 22 zunächst wieder ansteigt, um anschließend erneut abzufallen. Die Übersetzung im 1. Gang ist größer als im 2. Gang, was die oben beschriebenen Effekte noch verstärkt.

Im Punkt 32 kommt das Fahrzeug zum Stillstand, so dass die Abtriebsdrehzahl 24 und die Turbinendrehzahl 22 sind gleich Null.

Nach Ablauf einer bestimmten vorgegebenen Zeitspanne, im Beispiel der Fig. 2 im Punkt 34, schaltet das Automatikgetriebe 8 in den Bereitschaftsmodus, d. h. der Antriebsanlage wird unterbrochen, so dass die Turbine 16 von der Pumpe 14 auf eine Drehzahl 22 etwa im Bereich der Motordrehzahl 20 beschleunigt werden kann.

In dem in Fig. 3 dargestellten, erfindungsgemäßen Verfahren wird im Punkt 126 wiederum die mechanische Kupplung 18 geöffnet und damit der Drehmomentwandler 6 aktiviert. Wie im Beispiel der Fig. 2 arbeitet der Drehmomentwandler 6 im Schubmomentenbetrieb, bis im Punkt 128 der Wandler drehmomentenfrei ist und in einen Zugmomentenbetrieb übergeht.

Wenn die Turbinendrehzahl 122 um einen bestimmten vorgegebenen Betrag unter die Motordrehzahl 120 abgesunken ist (in Fig. 3 im Punkt 130) schaltet das Automatikgetriebe 8 direkt aus dem aktuellen Gang, im vorliegenden Beispiel aus dem 2. Gang in den Bereitschaftsmodus, so dass die Antriebsanlage unterbrochen und die Turbine 16 antriebstechnisch von den Antriebsrädern abgekoppelt wird. Bei vorhandenem Retarder muss dieser hier spätestens ausgeschaltet sein.

Die mehr oder weniger widerstandslos drehende Turbine 16 kann von der Pumpe 14 mitgenommen werden, wobei lediglich ein kleiner, durch den aktiv eingestellten, geregelten Schlupf verursachter Drehzahlunterschied zwischen der Leerlauf-Motordrehzahl 120 und der Turbinendrehzahl 122 besteht. In dem in Fig. 3 rechts vom Punkt 128 bestehenden Zugmomentenbereich besteht nur ein äußerst geringes Zugmoment im Drehmomentwandler, so dass im Wesentlichen keine Bremsleistung zusätzlich zu der für das Abbremsen des Fahrzeuges aufgebracht werden muss.

Wenn die Anhaltebedingungen weiter bestehen, also die Betriebsbremse aktiv ist, kommt das Fahrzeug im Punkt 132 infolge der anhaltenden Betätigung der Betriebsbremse zum Stehen, so dass die Abtriebsdrehzahl 124 gleich Null wird; es erfolgt kein Entlastungsstoß und kein unerwartetes Zurückrollen.

Wird aus dem 2. Gang abgebremst, so werden bei einer bestimmten Fahrgeschwindigkeit die Schaltelemente des Automatikgetriebes vom 2. Gang in die des 1. Gangs gewechselt, damit beim Wiederanfahren der 1. Gang schnell zur Verfügung steht.

Wird vor dem Wechsel der Schaltelemente wieder beschleunigt, so erhält man zunächst den 2. Gang, und falls erforderlich eine Rückschaltung RS 2-1 vom zweiten in den ersten Gang.

Da im annähernd schub- und zugmomentenfreien Zustand in den Bereitschaftsmodus übergegangen wird, ist das weitere Bremsen und Halten des Fahrzeuges ausschließlich von der Fahreraktivität (Bremsen, Gasgeben) selbst bestimmt. Die Momentenbedingungen in der Antriebsanlage, also der Übergang in den Bereitschaftsmodus durch Wiedereinlegen eines Ganges, gehen konform mit dem Fahrerwunsch oder mit der Bewegungsrichtung des Fahrzeugs. Rollt das Fahrzeug "rückwärts", was mittels Drehrichtungssensor festgestellt werden kann, so wird ebenfalls der Bereitschaftsmodus verlassen. Wenn der Fahrer bremst, wird in den Bereitschaftsmodus geschaltet, wenn er Gas gibt, wird der Bereitschaftsmodus verlassen und ein Gang eingelegt.

### Bezugszeichen

- 2: Antriebsanlage
- 4: Motor
- 6: hydraulischer Wandler
- 8: Automatikgetriebe
- 10: Retarder
- 12: Ausgangswelle
- 14: Hydraulikpumpe
- 16: Turbine
- 18: mechanische Kupplung
- 20: Motordrehzahl
- 22: Turbinendrehzahl
- 24: Abtriebsdrehzahl der Abtriebswelle
- 26: Wandlerkupplung Öffnen
- 28: Drehmomentenfreiheit
- 30: Rückschaltung vom 2. in den 1. Gang (RS 2-1)
- 32: Fahrzeugstillstand
- 34: Schalten in Bereitschaftsmodus
- 120: Motordrehzahl
- 122: Turbinendrehzahl
- 124: Abtriebsdrehzahl
- 126: Wandlerkupplung Öffnen
- 128: Drehmomentenfreiheit
- 130: Schalten in Bereitschaftsmodus
- 132: Fahrzeugstillstand

## Patentansprüche

1. Verfahren zum Schalten eines Kraftfahrzeug-Automatikgetriebes (8) beim Anhalten des Fahrzeugs aus dem Fahrzustand, wobei das Automatikgetriebe (8) mit zumindest einem Fahrzeugmotor (4) und einem hydrodynamischen Drehmomentwandler (6), umfassend eine Pumpe (14) und eine Turbine (16), eine Antriebsanlage (2) bildet, und bei Vorliegen bestimmter, vorgegebener Anhaltebedingungen das Automatikgetriebe (8) automatisch in einen Bereitschaftsmodus schaltet, **dadurch gekennzeichnet, dass** bei vorgegebenen Anhaltebedingungen noch während des Fahrzustandes das Automatikgetriebe (8) in einen Bereitschaftsmodus schaltet, in dem die Antriebsanlage (2) unterbrochen und die Turbine (16) antriebstechnisch von den Antriebsrädern des Fahrzeugs abgekoppelt ist.

2. Verfahren nach Anspruch 1, **dadurch gekennzeichnet, dass** die vorgegebenen Anhaltebedingungen umfassen:
a) Gaspedal nicht betätigt,
b) Betriebsbremse betätigt.

3. Verfahren nach Anspruch 1 oder 2, **dadurch gekennzeichnet, dass** die Umschaltung in den Bereitschaftsmodus erfolgt, wenn die Turbinendrehzahl (122) des Drehmomentwandlers (6) unter die Pumpendrehzahl (Motordrehzahl 120) abgesunken ist.

4. Verfahren nach Anspruch 3, **dadurch gekennzeichnet, dass** die Umschaltung in den Bereitschaftsmodus erfolgt, wenn die Turbinendrehzahl (122) zwischen 100 U/min bis 200 U/min, vorzugsweise 150 U/min unter der Pumpendrehzahl (Motordrehzahl 120) liegt.

5. Verfahren nach einem der Ansprüche 1 bis 4, für ein Automatikgetriebe mit einer Retardervorrichtung (10), **dadurch gekennzeichnet, dass** im Wesentlichen, spätestens mit dem Umschalten in den Bereitschaftsmodus, die Retardervorrichtung (10) ausgeschaltet ist.

6. Verfahren nach Anspruch 5, **dadurch gekennzeichnet, dass** die Retardervorrichtung (10) ausgeschaltet wird, wenn ein positiver Wandlerschlupf eintritt.

## Claims

1. Method for shifting a motor vehicle automatic transmission (8) when the vehicle comes to a stop from the driving state, the automatic transmission (8) forming a drive system (2) together with at least one vehicle engine (4) and a hydrodynamic torque converter (6) which comprises a pump (14) and a turbine (16), and the automatic transmission (8) switching automatically into a readiness mode in the presence of certain predefined stop conditions, **characterized in that**, in the event of predefined stop conditions arising still during the driving state, the automatic transmission (8) switches into a readiness mode in which the drive system (2) is disconnected and the turbine (16) is decoupled in terms of drive from the drive wheels of the vehicle.

2. Method according to Claim 1, **characterized in that** the predefined stop conditions comprise:
a) accelerator pedal not actuated,
b) service brake actuated.

3. Method according to Claim 1 or 2, **characterized in that** the switch into the readiness mode takes place when the turbine rotational speed (122) of the torque converter (6) has fallen below the pump rotational speed (engine rotational speed 120).

4. Method according to Claim 3, **characterized in that** the switch into the readiness mode takes place when the turbine rotational speed (122) lies between 100 rpm and 200 rpm, preferably 150 rpm, below the pump rotational speed (engine rotational speed 120).

5. Method according to one of Claims 1 to 4 for an automatic transmission having a retarder device (10), **characterized in that** the retarder device (10) is deactivated substantially at the latest upon the switch into the readiness mode.

6. Method according to Claim 5, **characterized in that** the retarder device (10) is deactivated if positive converter slip occurs.

## Revendications

1. Procédé de commutation d'une boîte de vitesses automatique (8) d'un véhicule automobile à l'arrêt du véhicule depuis l'état de conduite, dans lequel la boîte de vitesses automatique (8) forme un système d'entraînement (2) avec au moins un moteur de véhicule (4) et un convertisseur de couple hydrodynamique (6), comprenant une pompe (14) et une turbine (16), et qui, en présence de conditions d'arrêt prédéfinies déterminées, commute la boîte de vitesses automatique (8) automatiquement dans un mode de disponibilité, **caractérisé en ce que** dans des conditions d'arrêt prédéfinies, la boîte de vitesses automatique (8), encore pendant l'état de conduite, passe dans un mode de disponibilité, dans lequel le système d'entraînement (2) est interrompu et la turbine (16) est désaccouplée des roues motrices du véhicule en termes d'entraînement.

2. Procédé selon la revendication 1, **caractérisé en ce que** les conditions d'arrêt prédéfinies comprennent les conditions suivantes :
a) pédale d'accélération non actionnée ;
b) frein de service actionné.

3. Procédé selon la revendication 1 ou 2, **caractérisé en ce que** la commutation dans le mode de disponibilité a lieu lorsque la vitesse de rotation de la turbine (122) du convertisseur de couple (6) est descendue en dessous de la vitesse de rotation de la pompe (régime du moteur 120).

4. Procédé selon la revendication 3, **caractérisé en ce que** la commutation au mode de disponibilité a lieu lorsque la vitesse de rotation de la turbine (122) est entre 100 t/min et 200 t/min, de préférence à 150 t/min en dessous du régime de la pompe (régime du moteur 120).

5. Procédé selon l'une quelconque des revendications 1 à 4, pour une boîte de vitesses automatique avec un dispositif retardateur (10), **caractérisé en ce que** le dispositif retardateur (10) est coupé essentiellement au plus tard lors de la commutation dans le mode de disponibilité.

6. Procédé selon la revendication 5, **caractérisé en ce que** le dispositif retardateur (10) est coupé lorsqu'un glissement positif du convertisseur a lieu.
